(19) **Europäisches Patentamt / European Patent Office / Office européen des brevets**

(11) **EP 4 412 035 A1**

(12) **EUROPEAN PATENT APPLICATION**

(43) Date of publication:
07.08.2024 Bulletin 2024/32

(21) Application number: 24152292.9

(22) Date of filing: 17.01.2024

(51) International Patent Classification (IPC):
$H02J\ 50/20\ ^{(2016.01)}$ $H02J\ 50/80\ ^{(2016.01)}$
$H04W\ 52/36\ ^{(2009.01)}$

(52) Cooperative Patent Classification (CPC):
H02J 50/20; H02J 50/80; H04W 52/367;
H04W 52/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.02.2023 FI 20235100

(71) Applicant: Nokia Solutions and Networks Oy
02610 Espoo (FI)

(72) Inventors:
• MAO, Xiaomao
Paris (FR)
• RATASUK, Rapeepat
Inverness (US)

(74) Representative: Nokia EPO representatives
Nokia Technologies Oy
Karakaari 7
02610 Espoo (FI)

(54) **WIRELESS POWER TRANSFER CONTROL**

(57) Apparatuses and methods in a communication system and controlling power of wireless power transfer are disclosed. A solution comprises receiving (400) from at least one terminal device information on power conversion window of wireless power transfer transmission requested by the terminal device, determining (402) the power level of wireless power transfer transmission based at least in part on the received information and controlling (404) wireless power transfer transmission based on the determination.

FIG. 4A

EP 4 412 035 A1

## Description

## Field

The exemplary and non-limiting embodiments of the invention relate generally to wireless communication systems. Embodiments of the invention relate especially to apparatuses and methods in wireless communication networks.

## Background

Wireless telecommunication systems are under constant development. There is a constant need for higher data rates and high quality of service. Terminal devices of wireless telecommunication systems enable the user to access many services. To ease the use of the device, it is equipped with a large screen, typically a touch sensitive screen, which as a large resolution. Further, communication capabilities of the terminal devices are powerful. The versatile capabilities of devices require efficient power supply from the device and thus battery capacity of terminal devices has constantly increased. However, in many cases user experience is that the devices must be charged often.

Wireless power transfer (WPT) or electromagnetic power transfer is currently under study. In WPT, a terminal device is charged wirelessly using electromagnetic radiation, typically from a distant source, for example from a network element or a base station of the communication system.

## Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there are provided the apparatuses and methods of the independent claims.

In an embodiment, information on power level of a transmission received by the terminal device relates to at least one of wireless power transfer transmission, signalling or data transmission the terminal device has received from a base station.

In an embodiment, an apparatus in a communication system comprises means for receiving from at least one terminal device information on power conversion window of wireless power transfer transmission requested by the terminal device, means for determining the power level of wireless power transfer transmission based at least in part on the received information and means for control wireless power transfer transmission based on the determination.

In an embodiment, an apparatus in a communication system comprises means for transmitting to a network element information on power conversion window of wireless power transfer transmission of the apparatus and means for controlling reception of wireless power transfer transmission.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

## List of drawings

Embodiments of the present invention are described below, by way of example only, with reference to the accompanying drawings, in which

Figures 1 and 2 illustrate examples of simplified system architecture of a communication system;
Figure 3 illustrates RF to DC conversion efficiency as a function of received power;
Figures 4A and 4B are flowcharts illustrating some embodiments;
Figure 5 is a signalling chart illustrating an embodiment,
Figure 6 illustrates a simple example of an (e/g)NodeB with three beams; and
Figures 7A and 7B illustrate simplified examples of apparatuses applying some embodiments of the invention.

## Description of some embodiments

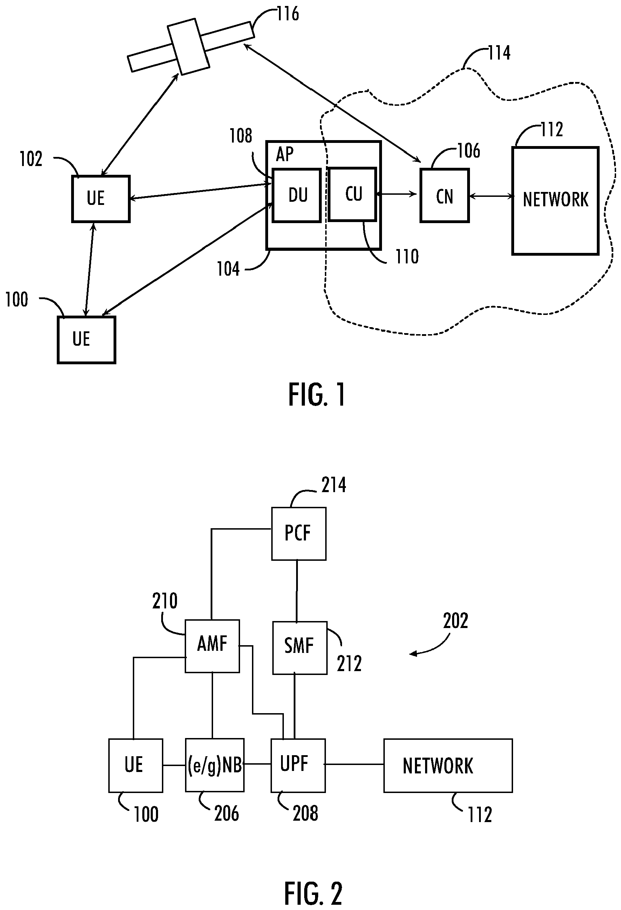

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual subnetworks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the megaconstellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

The (e/g)NodeB 206 may serve the terminal devices in its coverage are by utilising a beamforming technique, where it transmits signals to the terminal devices via one or more beams. The beams may have at least partly different coverage areas. In an embodiment, a terminal device may receive a signal via more than one beam. Typically, transmission on each beam comprises a beam index. Thus, the terminal device may know which beam it is receiving.

Wireless charging of terminal devices has been under study in recent years. Wireless charging can be divided into two basic categories, near field charging and far field charging. In near field charging, the distance between the charger and the terminal device is typically very short, such as millimetres or centimetres. The charging is performed with non-radiative techniques, such as by magnetic fields using inductive coupling or by electric fields using capacitive coupling.

In far field charging the distance between the charger and the terminal device is typically hundreds of metres or kilometres. The charging is performed with non-radiative techniques, such by beams of electromagnetic radiation, like microwaves or laser beams.

Like in all radiation solutions, an important issue associated with far field charging is to limit the exposure of people and other living beings to potentially injurious electromagnetic fields. However, this is not discussed here further as it has no connection to the embodiments of the invention.

It has been shown that that for power transfer transmission, high power transfer efficiency comes with high Peak to Average Power Ratio, PAPR, which is usually detrimental to information transfer. Thus, by utilising time sharing between a power transfer waveform and an information delivery waveform optimal joint power and information transfer is obtained. Therefore, to implement a joint power and information transfer system, a waveform dedicated for power transfer and separate from information transfer may be needed.

Thus, a dedicated waveform, other than the one used for information transmission, may be used to transfer power for the energy harvesting devices, such as IoT devices. For example, a separate frequency bandwidth may be used for power transfer and a terminal device can switch to energy harvesting mode during the transmission idle time or the network can configure a power transfer gap (similar to a measurement gap) to charge the energy storage component such as battery or capacitor.

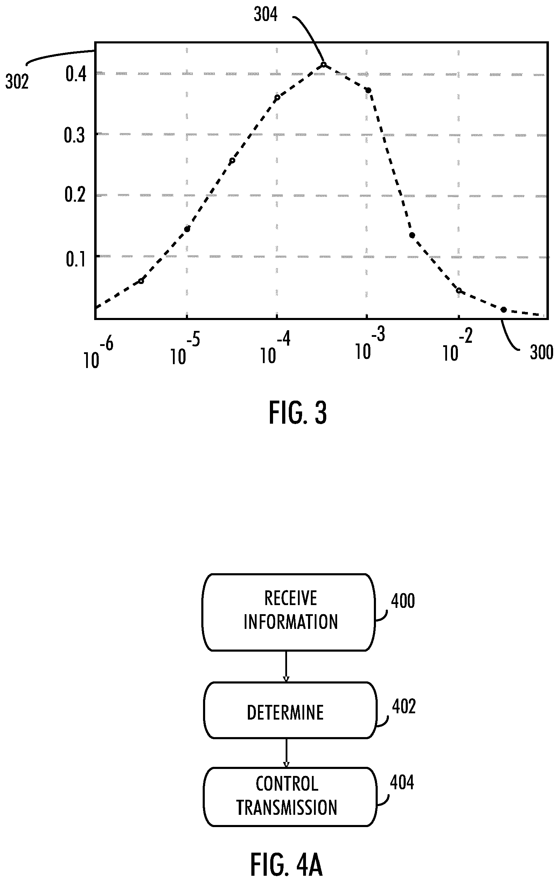

The downlink power control scheme for information transmission assumes a monotonic function of the demodulation performance on the receiving power; the higher the receiving power the better performance. However, for wireless power transfer the situation is different: the power conversion efficiency is not a monotonic function on receiving power. When the receiving power reaches a certain point, the power conversion efficiency drops sharply, and the receiving circuit saturates and enters a diode breakdown region. Fig. 3 illustrates this. On x-axis 300 is average input power and on y-axis 302 RF to DC conversion efficiency. As the input power is increased, the conversion efficiency also increases, until a voltage breakdown 304 is reached. After that point the conversion efficiency rapidly decreases. This may which potentially lead to overheating and/or hardware breakdown. Therefore, a new power control scheme is needed for wireless power transfer.

In an embodiment, the non-monotonic power conversion efficiency at the terminal devices may be taken into account in the wireless power transfer power control scheme. For example, a receiving power window may be defined for wireless power transfer. The receiving power window may define the received power, with which the power conversion efficiency of a terminal device is largest. In an embodiment, the base station or network element may take the receiving power windows of the terminal devices into account when controlling the transmission power of the wireless power transfer. The target of the control is to optimise the power conversion efficiency at the terminal devices.

In an embodiment, the energy harvesting devices may be configured to report the lower bound and the higher bound (e.g. thresholds) for the received power to maintain high power conversion efficiency.

The flowchart of Fig. 4A illustrates an embodiment. The flowchart illustrates an example of an embodiment applied at a network element apparatus, such as at a (e/g)NodeB, for example.

In step 400, the apparatus is configured to receive, from at least one terminal device, information on power conversion window of wireless power transfer transmission requested by the terminal device.

In an embodiment, the received information on power conversion window of wireless power transfer transmission comprises a lower and a higher threshold for the power level.

In an embodiment, the information on power conversion window of wireless power transfer transmission comprises a power conversion window category of the terminal device, the category denoting the capability of the terminal device to receive wireless power transfer transmission. For example, several receiving power window categories may be defined beforehand, the categories may indicate the energy harvesting devices as category high, medium, low and none. The last category may indicate that the device doesn't support energy harvesting. The number of categories may naturally be other than four. The terminal device may report its category index and the network may determine required transmission power based at least in part on the category.

In step 402, the apparatus is configured to determine the power level of wireless power transfer transmission based at least in part on the received information.

In step 404, the apparatus is configured to control wireless power transfer transmission based on the determination.

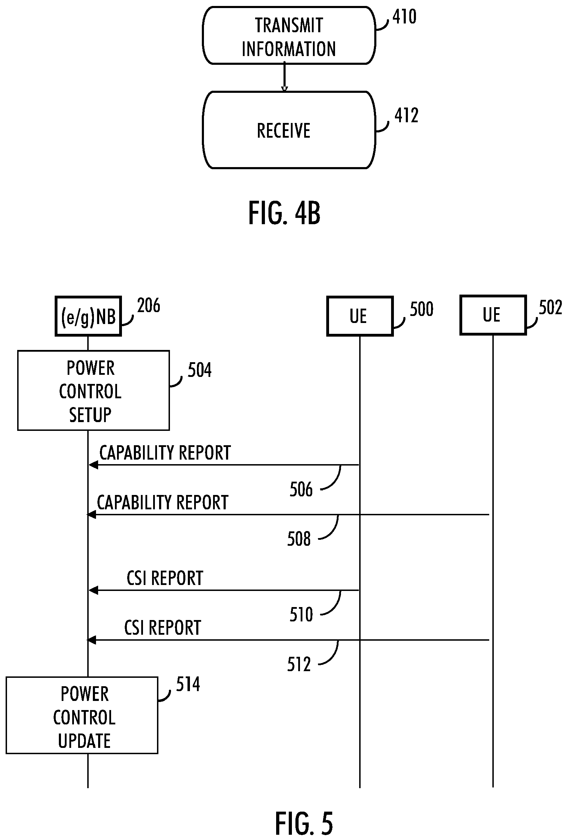

The flowchart of Fig. 4B illustrates an embodiment. The flowchart illustrates an example of an embodiment applied at a terminal device apparatus.

In step 410, the apparatus is configured to transmit to a network element information on power conversion window of wireless power transfer transmission of the apparatus.

In an embodiment, the information on power conversion window of wireless power transfer transmission comprises a lower and a higher threshold for the power level.

In an embodiment, the information on power conversion window of wireless power transfer transmission comprises a power conversion window category of the apparatus, the category denoting the capability of the apparatus to receive wireless power transfer transmission.

In step 412, the apparatus is configured to control reception of wireless power transfer transmission.

In an embodiment, the terminal device may transmit to the network, for example in connection establishing phase, an energy harvesting capability indication, i.e., whether it supports wireless power transfer or not. The indication may be done, for example, by a 1-bit indication if the terminal device supports energy harvesting, or implicitly derived by indicating the receiving power window size to be 0.

In an embodiment, a terminal device may be specified or configured to shut off or limit harvest energy from gNB-specific frequency sources when in idle mode. Instead, other ambient power sources could be used. This would allow the terminal device to harvest sufficient energy to connect to the network and then the network could deliver more energy using a WPT signal.

In the NR system, information transmission is realised as a beambased system. In an embodiment, the wireless power transfer transmission may be realised utilising the same beams. The (e/g)NodeB may transmit wireless power transfer transmission beam-wise, with a dedicated transmission power on each beam.

In an embodiment, for the initial beam grid deployment a beam power configuration scheme utilising open loop downlink power control is proposed. Further, a power update scheme may be employed to adapt the beam power to mobility of the terminal devices (closed loop downlink power control). For both the open loop and closed loop schemes, a downlink power control parameter may be determined based on the channel state information (CSI) reports from the energy harvesting devices in the beam coverage. The beam power may be configured or adjusted to keep the receiving power at the receiving devices within their receiving power window to achieve high power conversion efficiency and avoid potential device breaking due to overheating.

CSI is used in modern wireless communication systems. CSI acquisition is important for example for multiple-input multiple-output (MIMO) precoding. In CSI, the channel or channel state between the serving base station such as a (e/g)NodeB (or transmitting node) and terminal device is estimated starting from pilots transmitted by the (e/g)NodeB. The pilot signals or symbols may periodic, semi-persistent or aperiodic.

With the proposed solution, the optimal power conversion efficiency operation point for wireless power transfer may be maintained for energy harvesting devices such as terminal devices in the network. The proposed solution provides good interference control as the wireless transferred energy can be seen as cross-band interference.

Fig. 5 illustrates an example of signalling between the (e/g)NodeB 206 and the terminal devices 500, 502.

The, (e/g)NodeB 206 set initial transmission power for the wireless power transfer transmission at step 504.

At the deployment stage, (e/g)NodeB 206 has no information regarding receiving power windows or categories of terminal devices in the coverage area. Each beam may have different power control or power allocation parameter for wireless power transfer. As no information of terminal device properties may not be available at this phase, the (e/g)NodeB, may be configured to set the transmission power of the wireless power transfer transmission assuming the worst case: the minimum of the upper bounds of receiving power windows/categories for all standardized energy harvesting terminal devices, which represents the highest applicable receiving power at the initial deployment stage for each beam in the beam grid.

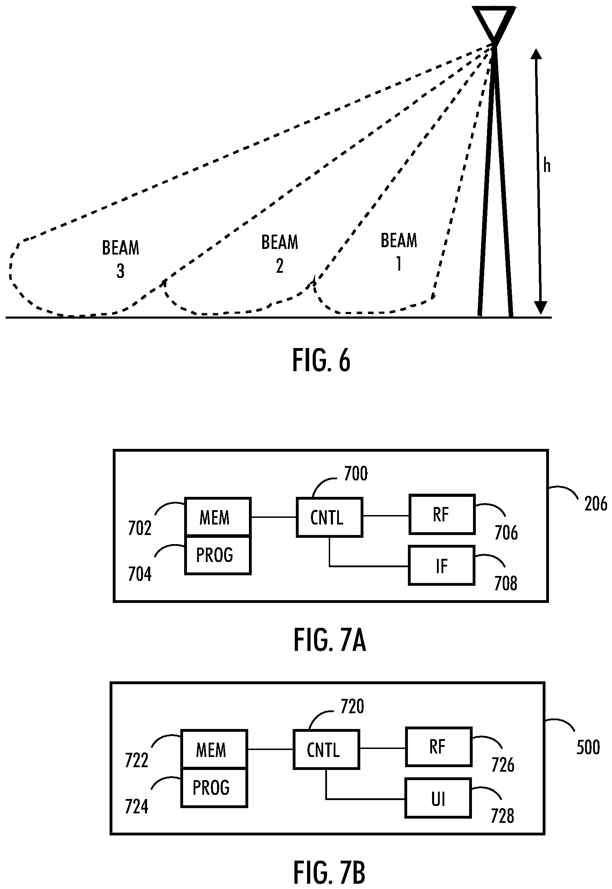

In order to determine the transmission power of the wireless power transfer transmission (e/g)NodeB is configured to measure the expected pathloss for the beam. In an embodiment, this can be calculated geometrically using the height of the (e/g)NodeB and the horizontal and vertical projection angle of the beam. Fig. 6 illustrates a simple example of an (e/g)NodeB with three beams, BEAM 1, BEAM 2 and BEAM 3. In the example of Fig. 3, we assume that the vertical angle of BEAM $i$ is $\theta_i$, the horizontal angle is 0 and the height of the (e/g)NodeB antenna mast is $h$. Using free space isotropic antenna model pathloss for BEAM $i$ can be calculated as,

$$PL_{exp} = \left( \frac{c}{4\pi \cdot \frac{h}{\cos(\theta_i)} \cdot f} \right)^2$$

where, c represents the light of speed and $f$ the carrier frequency. Utilizing the expected pathloss for each beam in the beam grid, (e/g)NodeB can then calculate the transmit power for the beams and deploy the beam grid. It may be noted that pathloss models other than the free space isotropic antenna model can be applied to calculate the expected pathloss here, such as COST models and directional antennas, for example.

Next, the terminal devices 500, 502 are configured to transmit and the (e/g)NodeB is configured to receive information 506, 508 on power conversion window of wireless power transfer transmission requested by the terminal devices. In an embodiment, the information comprises a power conversion window category of the apparatus, the category denoting the capability of the apparatus to receive wireless power transfer transmission. In an embodiment, the information comprises a lower and a higher threshold for the power level.

In an embodiment, the terminal devices 500, 502 are configured to transmit and the (e/g)NodeB is configured to receive CSI reports 510, 512 from which the (e/g)NodeB may determine the dynamic pathloss of each terminal device. The CSI report may comprise beam index and Reference Signal Received Power, RSRP, measurement performed by the terminal device.

Based on the received information, the (e/g)NodeB may be configured to update 514 the transmission power of the wireless power transfer transmission of each beam. Based on the reports form the terminal devices, the (e/g)NodeB is able to handle terminal device mobility and terminal device channel updates.

In an embodiment, the terminal devices 500, 502 are configured to transmit a report 506, 508 comprising the support for energy harvesting and the receiving power window/category during Radio Resource Control, RRC, at connection setup stage. With this information and the CSI reports, the (e/g)NodeB 206 can know the terminal devices associated with each beam in the beam grid as well their receiving power window/category. With the aid of CSI reports the (e/g)NodeB can calculate the real pathloss from the RSRP measurement, and therefore determine the transmitting power for beams using the pathloss and the receiving power window/category information from the terminal devices.

As an example, assume a terminal device $i$ is associated with beam index $j$, and having $W_i$ as the higher threshold the power level of for the power level of the power conversion window, $M_i$ as the lower threshold for the power level of the power conversion window and the pathloss estimated from RSRP measurement is $PL_i$, then the transmitting power $P_j$ for beam $j$ can be calculated as

$$ P_j = \min\left\{\frac{W_i}{PL_i}\right\}, i \in B_j. $$

where $B_j$ is the set containing all terminal devices associated with beam $j$. It may be noted that if $P_j < M_i$ for any $i \in B_j$, the (e/g)NodeB may consider to reschedule the terminal device $i$ to other beam which could provide higher power transfer.

Figs. 7A and 7B illustrate embodiments. The figures illustrate simplified examples of apparatuses applying embodiments of the invention. It should be understood that the apparatuses are depicted herein as examples illustrating some embodiments. It is apparent to a person skilled in the art that the apparatuses may also comprise other functions and/or structures and not all described functions and structures are required. Although the apparatuses have been depicted as one entity, different modules and memory may be implemented in one or more physical or logical entities.

Fig. 7A illustrates an example of an apparatus which may be a base station, (e/g)NodeB 206 or a part of base station or (e/g)NodeB.

The apparatus 206 of the example includes a control circuitry 700 configured to control at least part of the operation of the apparatus.

The apparatus may comprise a memory 702 for storing data. Furthermore, the memory may store software 704 executable by the control circuitry 700. The memory may be integrated in the control circuitry.

The apparatus may comprise one or more interface circuitries 706, 708. The interface circuitries are operationally connected to the control circuitry 700. An interface circuitry 706 may be a set of transceivers configured to communicate wirelessly with terminal devices or user equipment of a wireless communication network. The interface circuitry may be connected to an antenna arrangement (not shown). The apparatus may also comprise a connection to a transmitter instead of a transceiver. The apparatus may further comprise an interface 708 configured to communicate with other network elements such a core network or other corresponding apparatuses, for example a user interface.

In an embodiment, the software 704 may comprise a computer program comprising program code means adapted to cause the control circuitry 700 of the apparatus to realise at least some of the embodiments described above.

Fig. 7B illustrates an example of an apparatus which may be user equipment or terminal device 500 or a part of user equipment or a terminal device.

The apparatus 500 of the example includes a control circuitry 720 configured to control at least part of the operation of the apparatus.

The apparatus may comprise a memory 722 for storing data. Furthermore, the memory may store software 724 executable by the control circuitry 720. The memory may be integrated in the control circuitry.

The apparatus may comprise one or more interface circuitries 726, 728. The interface circuitries are operationally connected to the control circuitry 720. An interface circuitry 726 may be a set of transceivers configured to communicate with a RAN node such as an (e/g)NodeB of a wireless communication network. The interface circuitry may be connected to an antenna arrangement (not shown). The apparatus may also comprise a connection to a transmitter instead of a transceiver. The apparatus may further comprise a user interface 728.

In an embodiment, the software 724 may comprise a computer program comprising program code means adapted to cause the control circuitry 720 of the apparatus to realise at least some of the embodiments described above.

The steps and related functions described in the above and attached figures are in no absolute chronological order, and some of the steps may be performed simultaneously or in an order differing from the given one.

Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a highlevel programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

**Claims**

1. An apparatus in a communication system, comprising:
   a processor (700) ; and a memory (702) including instructions, the instructions, when executed by the processor, cause the apparatus to:

   receive (400) from a set of terminal devices utilising a beam information on power conversion window of wireless power transfer transmission requested by the terminal devices, the information comprising a lower and a higher threshold for the power level of wireless power transfer transmission each terminal device is capable of receiving;
   receive from the set of terminal devices information on power level of a transmission received by the terminal devices;
   determine (402) the power level of wireless power transfer transmission for the utilised beam based at least in part on the received information, where the determined power level is the minimum of the received upper thresholds;
   control (404) wireless power transfer transmission of the utilised beam based on the determination.

2. The apparatus of claim 1, wherein the information on power level of a transmission received by the terminal device relates to at least one of wireless power transfer transmission, signalling or data transmission the terminal device has received from a base station.

3. The apparatus of any preceding claim 1-2, wherein the information on power conversion window of wireless power transfer transmission comprises a power conversion window category of the terminal device, the category denoting the capability of the terminal device to receive wireless power transfer transmission.

4. The apparatus of any preceding claim, wherein the apparatus is configured to select, prior receiving information on power level of wireless power transfer transmission required by any terminal device, a preselected value as the power level of the wireless power transfer transmission.

5. The apparatus of claim 1, the memory and the computer program code configured to, with the processor, cause the apparatus further to:

   determine, based on information on power level of the transmission received by at least one terminal device, pathloss of the at least one terminal device, wherein the information comprises beam index of the beam $j$ the at least one terminal device is receiving;
   determine the power level $P_j$ of wireless power transfer transmission for the beam $j$ as

$$P_j = \min\left\{\frac{W_i}{PL_i}\right\}, i \in B_j.$$

   where $W_i$ is the higher threshold for the power level of the power conversion window of terminal device $i$, $PL_i$ is the pathloss for the terminal device $i$ and $B_j$ is the set containing all terminal devices associated with beam $j$.

6. An apparatus in a communication system, comprising:
   a processor (720); and a memory (722) including instructions, the instructions, when executed by the processor, cause the apparatus to:

   transmit (410) to a network element information on power conversion window of wireless power transfer transmission of the apparatus, the information comprising a lower and a higher threshold for the power level of wireless power transfer transmission the apparatus is capable of receiving;
   transmit to the network element information on power level of a transmission received by the apparatus;
   control (412) reception of wireless power transfer transmission.

7. The apparatus of claim 6, wherein the information on power conversion window of wireless power transfer transmission comprises a power conversion window category of the apparatus, the category denoting the capability of the apparatus to receive wireless power transfer transmission.

8. A method in an apparatus in a communication system comprising the steps of:

   receiving (400) from a set of terminal devices utilising a beam information on power conversion window of wireless power transfer transmission requested by the terminal devices, the information comprising a lower and a higher threshold for the power level of wireless power transfer transmission each terminal device is capable of receiving;
   receive from the set of terminal devices information on power level of a transmission received by the terminal devices;
   determining (402) the power level of wireless power transfer transmission transmission for the utilised beam based at least in part on the received information, where the determined power level is the minimum of the received upper thresholds;
   controlling (404) wireless power transfer transmission of the utilised beam based on the determination.

9. The method of claim 8, wherein information on power level of transmission received by the terminal device relates to at least one of wireless power transfer transmission, signalling or data transmission the terminal device has received from a base station.

10. A method in an apparatus in a communication system comprising the steps of:

    transmitting (410) to a network element information on power conversion window of wireless power transfer transmission of the apparatus, the information comprising a lower and a higher threshold for the power level of wireless power transfer transmission the apparatus is capable of receiving;
    transmit to the network element information on power level of a transmission received by the apparatus;
    controlling (412) reception of wireless power transfer transmission.

11. The method of claim 10, wherein the information on power conversion window of wireless power transfer transmission comprises a power conversion window category of the apparatus, the category denoting the capability of the apparatus to receive wireless power transfer transmission.

12. A computer program comprising instructions, which, when executed by an apparatus, cause the apparatus to perform the method of any of claims 8 to 11.

FIG. 1

FIG. 2

FIG. 3

FIG. 4A

FIG. 4B

FIG. 5

FIG. 6

FIG. 7A

FIG. 7B

Europäisches
Patentamt

European
Patent Office

Office européen
des brevets

# EUROPEAN SEARCH REPORT

Application Number

EP 24 15 2292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/094212 A1 (TAKABAYASHI NOBUYUKI [JP] ET AL) 24 March 2022 (2022-03-24) | 1,3,4, 6-8, 10-12 | INV. H02J50/20 H02J50/80 H04W52/36 |
| A | * the whole document * | 5 | |
| X | US 2018/109150 A1 (KHAN TALHA AHMED [US] ET AL) 19 April 2018 (2018-04-19) * paragraphs [0011] - [0025]; figures 1,2 * | 1,2,6, 8-10,12 | |
| X | US 2021/194292 A1 (DUHOVNIKOV SVETOSLAV [DE] ET AL) 24 June 2021 (2021-06-24) * paragraphs [0040] - [0058]; claims 1-7; figures 1-4 * | 1,6,8, 10,12 | |

| | TECHNICAL FIELDS SEARCHED (IPC) |
|---|---|
| | H02J H04W |

The present search report has been drawn up for all claims

| Place of search | Date of completion of the search | Examiner |
|---|---|---|
| Munich | 18 June 2024 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2292

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2024

| Patent document cited in search report | | Publication date | Patent family member(s) | | Publication date |
|---|---|---|---|---|---|
| US 2022094212 A1 | | 24-03-2022 | CN | 114556743 A | 27-05-2022 |
| | | | EP | 4203242 A1 | 28-06-2023 |
| | | | JP | 6864801 B1 | 28-04-2021 |
| | | | JP | 2022034225 A | 03-03-2022 |
| | | | JP | 2022034500 A | 03-03-2022 |
| | | | US | 2022094212 A1 | 24-03-2022 |
| | | | WO | 2022039025 A1 | 24-02-2022 |
| US 2018109150 A1 | | 19-04-2018 | NONE | | |
| US 2021194292 A1 | | 24-06-2021 | DE | 102019220462 A1 | 24-06-2021 |
| | | | EP | 3840175 A1 | 23-06-2021 |
| | | | US | 2021194292 A1 | 24-06-2021 |

EPO FORM P0459

For more details about this annex : see Official Journal of the European Patent Office, No. 12/82